# EUROPEAN PATENT APPLICATION

(11) **EP 1 688 745 A1**
(43) Date of publication of application: **09.08.2006**
(21) Application number: 05002095.7
(22) Date of filing: 02.02.2005
(51) Int. Cl.: G01P 3/487, G01P 3/44

(54) **Encoder for rolling contact bearings**

(71) Applicant: Aktiebolaget SKF, S 415 50 Göteborg (SE)
(72) Inventor: Vignotto, Angelo, 10134 Torino (IT); Savarese, Claudio, 10060 Airasca (TO) (IT)
(74) Representative: Lotti, Giorgio

(57) **Abstract**

Encoder (1) for rolling contact bearings (2) provided with a support portion (10) which is interference-mounted onto a rotating race (3) of the rolling contact bearing (2), and with a control portion (20) which is integral with the support portion (10) in order to emit a signal in relation to the angular speed of the rotating race (3); the support portion (10) presenting a rigidity which is less than that of the control portion (20) in order to absorb any eventual deformation which might be due to assembly or functioning.

## Description

The present invention relates to an encoder for rolling contact bearings.

In the field of rolling contact bearings, it is well-known to mount an encoder on a rotating race of the rolling contact bearing in order to read the angular speed of the rotating race itself, the encoder comprising, in general, a support portion which is interference mounted onto the rotating race and which is made of metallic material, and a control portion which is integral with the support portion and which is made of magnetic rubber.

The reduction of the space available for mounting the encoder has also made it necessary to reduce the thickness relating to the support portion and the control portion with the consequent occurrence of some disadvantages which are due to the difference in rigidity of the two portions.

In fact, as in the kinds of encoders which have just been described above the support portion is made of metal, whereas the control portion is made of magnetic rubber, the deformation due to assembly and functioning which concerns the support portion often has repercussions for the control portion to such an extent that, in extreme cases, it can cause it to break. As, however, the accuracy of the reading of the angular speed of the rotating race depends above all on the geometrical characteristics of the control portion, even the slightest variation in the shape of the latter is sufficient to compromise the quality of the encoder in a substantial manner.

The aim of the present invention is to produce an encoder for rolling contact bearings which will permit the simple and cost-effective resolution of the above-described disadvantages.

According to the present invention an encoder for rolling contact bearings will be produced comprising a support portion which is interference mounted onto a rotating race of the rolling contact bearing, and a control portion which is integral with the support portion in order to measure the angular speed of the rotating race; the encoder being characterised by the fact that the support portion presents a rigidity which is less than a rigidity of the control portion in such a way as to absorb any eventual deformation which might be due to assembly and functioning.

The present invention will now be described with reference to the attached drawings, which illustrate a non-limiting form of embodiment of the present invention, and in which:
- FIGURE 1 is a section view, with some parts removed for reasons of clarity, of a preferred from of embodiment of the encoder for rolling contact bearings which is the subject of the present invention; and
- FIGURE 2 is a perspective view on an enlarged scale of a detail shown in FIGURE 1.

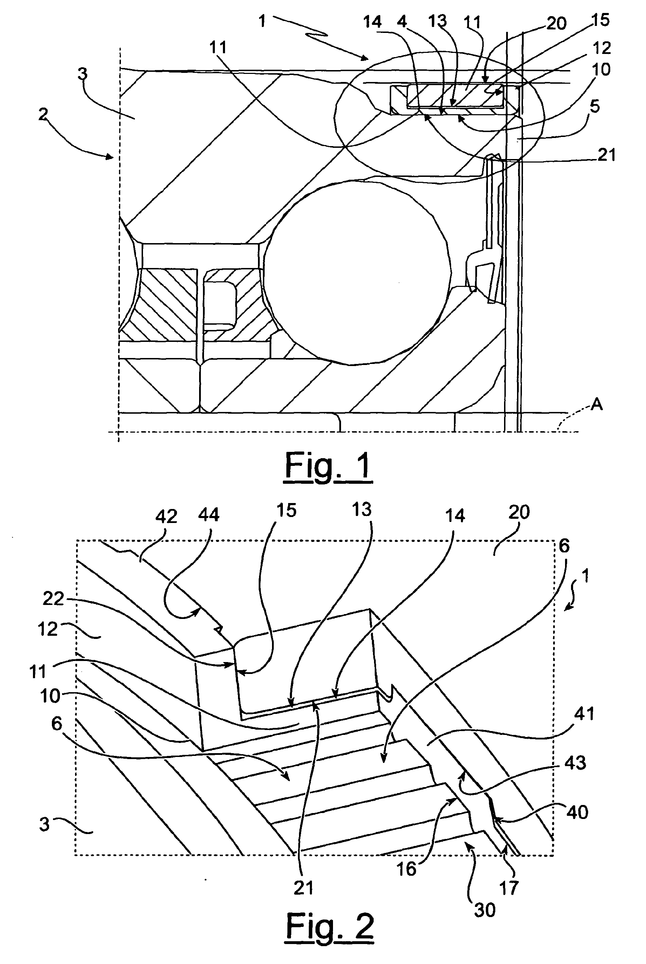

With reference to FIGURES 1 and 2, the number 1 refers to an encoder for rolling contact bearings 2 in its entirety.

The bearing 2 presents a rotation axis A and comprises an outer rotating race 3 which is provided with an end outlet 4 which is obtained in correspondence with an external axial border 5 of the race 3 itself.

The encoder 1 comprises a support shell 10 which is mounted on the outlet 4, and a control race 20 which is integral with the support shell 10 in order to read the angular speed of the race 3.

The support shell 10 presents an annular form co-axial to the axis A, and is made of plastic/rubber material, or of elastomeric material, for example thermo-plastic rubber, with a rigidity of 1. The shell 10 comprises a base cylindrical body 11, and two annular edges 12, which are arranged laterally to and integral with the body 11, and which extend radially towards the outside of the body 11 in order to define with the body 11 itself an annular housing 13 for the race 20.

In particular, the housing 13 is radially open towards the outside and is radially delimited towards the inside by a base surface 14, or rather by an external surface of the body 11 co-axial to the axis A, while it is axially delimited by two lateral faces 15 which are axially inside the edges 12.

The control race 20 is arranged inside the housing 13, and is made of plasto-ferrite and presents a rigidity of 2 of a value which is greater than the rigidity of 1 of the support shell 10 permitting the latter to absorb any eventual deformation which might arise from assembly or functioning.

The race 20 presents a shape and a thickness such as to completely fill the housing 13, and is radially delimited towards the inside by a cylindrical face 21 which is frontal to the surface 14, while it is axially delimited by two sides 22 which are frontal to the faces 15.

As is better illustrated in FIGURE 2, the encoder 1 comprises, finally, two anti-rotation devices 30 and 40, which are respectively interposed between the support shell 10 and the rotating race 3, and between the support shell 10 and the control race 20 in order to avoid any rotation whatsoever which might occur between the above-mentioned elements, thus ensuring the precision and accuracy of the reading of the encoder 1 itself.

The device 30 comprises a knurling 6 with straight teeth which is obtained on the outlet 4, and a shaped profile 16, which is obtained on an inner cylindrical surface 17 of the body 11, and which presents a shape which is complementary to the knurling 6 in such a way as to be coupled to the knurling 6 itself in order to render angularly integral with each other the support shell 10 and the rotating race 3.

Instead, the device 40 comprises a number of axial teeth 41 which are obtained on the base surface 14 and, in addition to the teeth 41 themselves, a number of teeth 42 which are obtained on the faces 15 of the edges 12.

The device 40 comprises, finally, a number of axial notches 43 which are obtained on the face 21 and which are engaged by the teeth 41, and, in addition to the notches 43, or as an alternative to the notches 43 themselves, a number of notches 44 which are obtained on the faces 15 of the edges 12 and which are engaged by the teeth 42.

The coupling between the teeth 41 and the notches 43, and/or the teeth 42 and the notches 44 renders angularly integral with each other the support shell 10 and the control race 20.

According to a form of embodiment of the encoder 1 which is not illustrated, but which is easily understandable from the above description, the teeth 41 and 42 of the anti-rotation device 40 may be advantageously replaced by respective films made of adhesive material, which would render the manufacture of the encoder 1 even more cost-effective.

Alternatively, furthermore, the knurling 6 could be replaced by a helix obtained by means of turning on the outlet 4 in order to ensure greater anti-unwinding properties of the encoder 1.

It is intended that the present invention should not be limited to the forms of embodiment which are herein described and illustrated, which are to be considered as examples of forms of embodiment of an encoder for rolling contact bearings, and which may be subject to further modifications relating to the shape and disposition of the parts, as well as to details pertaining to construction and assembly.

## Claims

1. Encoder (1) for rolling contact bearings (2) comprising a support portion (10) which is interference mounted onto a rotating race (3) of the rolling contact bearing (2), and a control portion (20) which is integral with the support portion (10) in order to measure the angular speed of the rotating race (3); the encoder (1) being **characterised by** the fact that the support portion (10) presents a rigidity which is less than a rigidity of the control portion (20) in such a way as to absorb any eventual deformation which might be due to assembly and functioning.

2. Encoder according to Claim 1, **characterised by** the fact that the support portion (10) is made of plastic/rubber material, and the control portion (20) is made of plasto-ferrite.

3. Encoder according to Claims 1 o 2, **characterised by** the fact that the support portion (10) comprises an annular housing (13) which is axially delimited by two radial edges (12).

4. Encoder according to Claims 1, 2 or 3, **characterised by** the fact of comprising first anti-rotation means (30) which are interposed between the support portion (10) and the said rotating race (3) in order to avoid any reciprocal rotation between the support portion (10) and the rotating race (3) themselves.

5. Encoder according to Claim 4, **characterised by** the fact of comprising second anti-rotation means (40) which are interposed between the support portion (10) and the control portion (20) in order to avoid any reciprocal rotation between the support portion (10) and the control portion (20) themselves.

6. Encoder according to Claims 4 or 5, **characterised by** the fact that the said first anti-rotation means comprise a first shaped profile (6) and a second shaped profile (16), which are obtained, respectively, on the rotating race (3), and on the support portion (10), and which are coupled to each other in order to render the rotating race (3) and the support portion (10) themselves angularly integral in relation to each other.

7. Encoder according to Claims 5 or 6, **characterised by** the fact that the said second anti-rotating means (40) comprise a number of axial teeth (41) which are integral with the support portion (10) and a number of notches (43), which are obtained in the control portion (20), and which are engaged by the said axial teeth (41).

8. Encoder according to Claims 5 or 6 or 7, **characterised by** the fact that the said second anti-rotation means (40) comprise a number of radial teeth (42) which are integral with the support portion (10) and a number of notches (44), which are obtained in the control portion (20), and which are engaged by the said radial teeth (42).

9. Encoder according to Claim 7, **characterised by** the fact that the axial teeth (41) are obtained on a base surface (14) of the said housing (13).

10. Encoder according to Claim 8, **characterised by** the fact that the radial teeth (42) are obtained on the said radial edges (12) of the housing (13).
